# EUROPÄISCHE PATENTSCHRIFT

(11) **EP 3 585 211 B1**
(45) Veröffentlichungstag und Bekanntmachung des Hinweises auf die Patenterteilung: **09.09.2020**
(21) Anmeldenummer: 18707223.6
(22) Anmeldetag: 08.02.2018
(51) Int. Cl.: A47B 91/02

(54) **ANORDNUNG MIT MÖBELTEILE UND VERBINDUNGSSTIFT**
ARRANGEMENT WITH FURNITURE PARTS AND CONNECTING PIN
ARRANGEMENT AVEC DES PIECES DE FOURNITURES ET UN ELEMENT DE CONNECTION

(30) Priorität: 21.02.2017 AT 501372017
(43) Veröffentlichungstag der Anmeldung: 01.01.2020
(73) Patentinhaber: Julius Blum GmbH, 6973 Höchst (AT)
(72) Erfinder: KAMPL, Markus, 6850 Dornbirn (AT); IRGANG, Markus, 6844 Altach (AT); SPERGER, Gerald, 6971 Hard (AT); SCHWARZMANN, Günter, 6850 Dornbirn (AT)
(74) Vertreter: Torggler & Hofinger Patentanwälte
(86) Internationale Anmeldenummer: PCT/AT2018/060034
(87) Internationale Veröffentlichungsnummer: WO 2018/152557

(56) Entgegenhaltungen:
- EP-A1- 1 516 561
- EP-A1- 2 868 228
- WO-A1-95/17611
- CN-A- 105 054 625
- DE-A1- 2 546 749
- DE-U1- 29 518 690
- DE-U1-202009 012 750
- FR-A5- 2 106 883
- US-A- 4 886 326
- US-A- 6 120 226

## Beschreibung

Die vorliegende Erfindung bezieht sich auf eine Anordnung mit einem ersten Möbelteil in Form einer Frontblende, einem zweiten Möbelteil in Form einer Schubladenwand, einem dritten Möbelteil in Form einer Schubladenreling, einem vierten Möbelteil in Form einem auf einer Schubladenwand aufgesetzten Wandelement und mit einem Verbindungsstift umfassend:
- einen Befestigungsabschnitt zur Befestigung des Verbindungstiftes am ersten Möbelteil,
- einen Halteabschnitt zum Verbinden des Verbindungsstiftes mit dem zweiten Möbelteil.

In der DE 20 2016 101 285 U1 der Anmelderin ist eine Vorrichtung zur Montage eines Möbelbeschlages an einem Möbelteil gezeigt, wobei ein Zapfen am Möbelteil vormontierbar und der Möbelbeschlag über eine Rastvorrichtung mit dem vormontierten Zapfen verrastbar ist.

In der DE 102 29 300 B3 ist ein Verbindungssystem für Möbelteile offenbart, wobei das Verbindungssystem eine Buchse, einen mit der Buchse lösbar verbindbaren Dübel und einen Spreizkörper zum Aufspreizen des Dübels aufweist. Die Buchse ist dabei in eine erste Bohrung eines ersten Möbelteiles einsetzbar, wobei ein verjüngter Hals des Dübels in eine Ausnehmung der Buchse einschiebbar und dadurch die Buchse in der ersten Bohrung arretierbar ist. Der Dübel ist zudem in eine zweite Bohrung des zweiten Möbelteiles einführbar und in dieser zweiten Bohrung durch den Spreizdübel spreizbar, sodass sich insgesamt eine feste Verbindung zwischen den beiden Möbelteilen ergibt.

In der CN 10505 4625 A ist ein Verbindungssystem für Schubladenelemente wie Frontblende, Wand und Reling offenbart.

Aufgabe der Erfindung ist es, eine Anordnung der eingangs erwähnten Gattung mit einem Verbindungsstift mit verschiedenen Einsatzmöglichkeiten anzugeben.

Dies wird erfindungsgemäß durch die Merkmale des Patentanspruchs 1 gelöst. Weitere vorteilhafte Ausgestaltungen der Erfindung sind in den Unteransprüchen angegeben.

Gemäß der Erfindung ist also vorgesehen, dass der Halteabschnitt des Verbindungsstiftes ein dem Befestigungsabschnitt zugewandtes Verbindungsstück in Form eines Vorsprungs oder einer Vertiefung zum formschlüssigen Verbinden eines der zweiten, dritten oder vierten Möbelteiles mit dem Verbindungsstift und einen über einen Hals in einer Längsrichtung des Verbindungsstiftes beabstandeten Kopfteil aufweist, wobei in einem Zustand, in welchem der Verbindungsstift über den Befestigungsabschnitt am ersten Möbelteil befestigt ist, wahlweise zumindest zwei verschiedene der zweiten, dritten und vierten Möbelteile durch das Verbindungsstück formschlüssig und/oder durch den Kopfteil kraftschlüssig mit dem Verbindungsstift verbindbar sind.

Durch den vorgeschlagenen Verbindungsstift mit dem Verbindungsstück und dem Kopfteil ist es also möglich, dass zumindest zwei verschieden ausgebildete der zweiten, dritten und vierten Möbelteile, beispielsweise eine erste Schubladenwand, eine Schubladenreling und ein auf einer zweiten Schubladenwand aufgesetztes Wandelement, wahlweise formschlüssig und/oder kraftschlüssig mit einer ersten Schubladenwand, beispielsweise in Form einer Frontblende, verbindbar sind.

Das Verbindungsstück des Verbindungsstiftes umfasst also zumindest einen Vorsprung oder zumindest eine Vertiefung, durch welche mithilfe einer zusammenwirkenden Gegenkontur des zweiten Möbelteiles eine formschlussartige Verbindung zwischen dem Verbindungsstift und dem zweiten Möbelteil herstellbar ist. Gegebenenfalls kann diese formschlüssige Verbindung auch mithilfe eines weiteren Bauteils herbeigeführt werden. Die formschlüssige Verbindung ist auch durch die Kraft eines Federelementes gesichert, wodurch die Belastbarkeit der formschlüssigen Verbindung zusätzlich erhöht wird.

Weitere Einzelheiten und Vorteile der Erfindung ergeben sich anhand der in den Figuren dargestellten Ausführungsbeispiele. Dabei zeigt bzw. zeigen:
- Fig. 1a, 1b: einen Teilbereich einer ersten Schublade in zwei perspektivischen Ansichten von oben,
- Fig. 2a, 2b: einen Teilbereich einer zweiten Schublade in zwei perspektivischen Ansichten von oben,
- Fig. 3a, 3b: einen Teilbereich einer dritten Schublade in zwei perspektivischen Ansichten von oben,
- Fig. 4: eine Ansicht von verschiedenen zweiten Möbelteilen und von verschiedenen Verbindungsstiften,
- Fig. 5: ein Ausführungsbeispiel eines Verbindungsstiftes in einer perspektivischen Ansicht,
- Fig. 6a-6f: die drei verschiedenen Möbelteile in Form der Schubladenwand, der Schubladenreling und dem Wandelement mit dem damit verriegelten Verbindungsstift,
- Fig. 7a-7d: den vorderen Endbereich einer niederen Schubladenwand und des darauf anzuordnenden Wandelementes sowie die Montage dieses Wandelementes in zeitlichen Abfolgen.

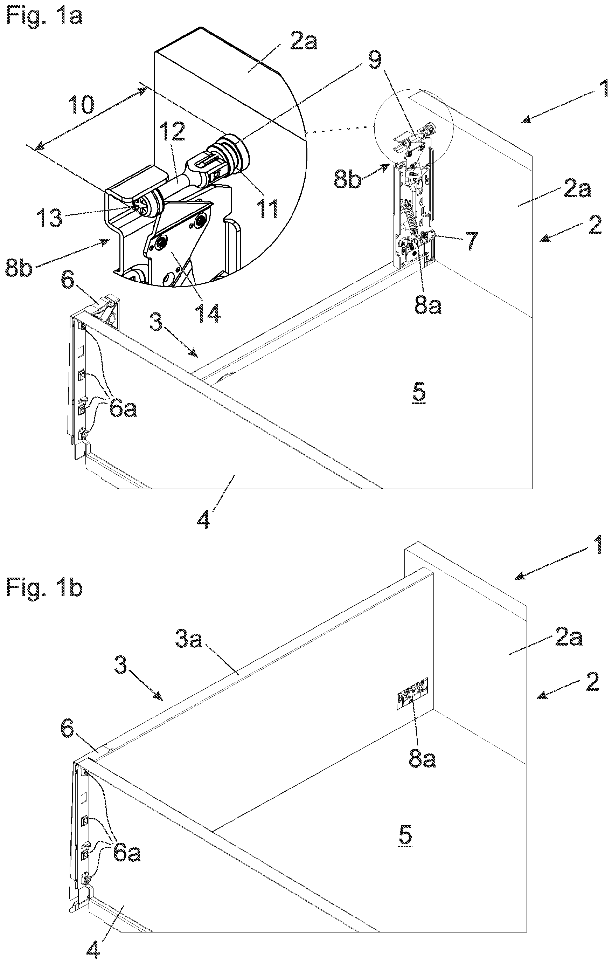

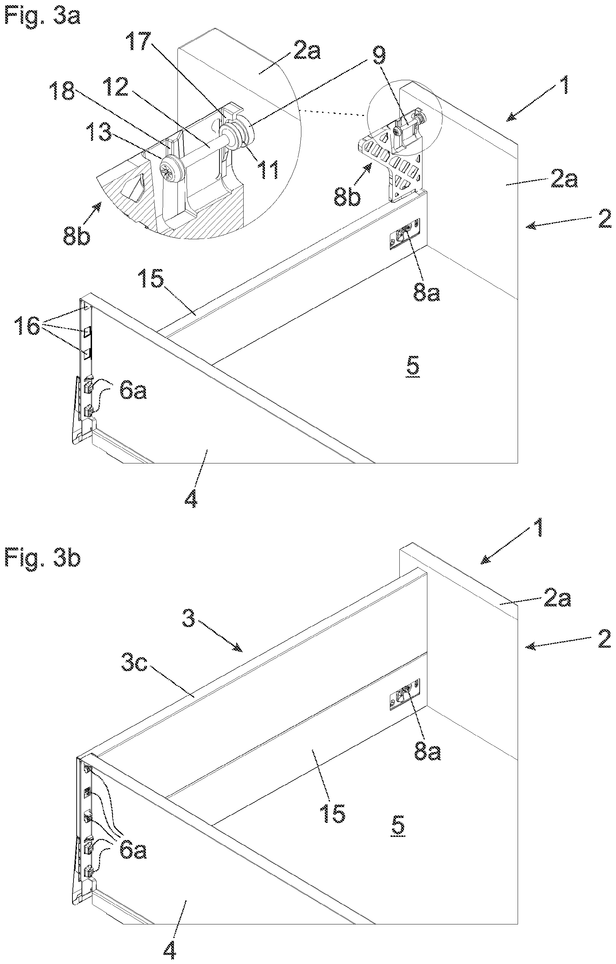

Fig. 1a zeigt einen Teilbereich einer ersten Schublade 1 mit einem Schubladenboden 5, einem ersten Möbelteil 2 in Form einer Frontblende 2a, einem zweiten Möbelteil 3 in Form einer Schubladenwand 3a und einer Rückwand 4. Die Schubladenwand 3a ist als Hohlkammerprofil mit einer inneren Profilwand und einer äußeren Profilwand ausgebildet, wobei das Hohlkammerprofil in Fig. 1a zur verbesserten Visualisierung ausgeblendet ist. Die Schubladenwand 3a weist einen Rückwandhalter 6 mit Vorsprüngen 6a auf, welche im montierten Zustand in korrespondierenden Öffnungen 16 (Fig. 3a) der Rückwand 4 eingreifen. Überdies weist die Schubladenwand 3a eine erste Befestigungsvorrichtung 8a auf, welche - wie an sich aus der EP 0 740 917 A1 bekannt - mit einem an der Frontblende 2a zu befestigenden Halteteil 7 lösbar verrastbar ist. Die Schubladenwand 3a umfasst ferner eine zweite Befestigungsvorrichtung 8b, welche im Montagelage eine höhere Lage als die erste Befestigungsvorrichtung 8a einnimmt. Die zweite Befestigungsvorrichtung 8b ist mit einem an der Frontblende 2a zu befestigenden, vormontierten Verbindungsstift 9 formschlüssig und/oder kraftschlüssig verbindbar.

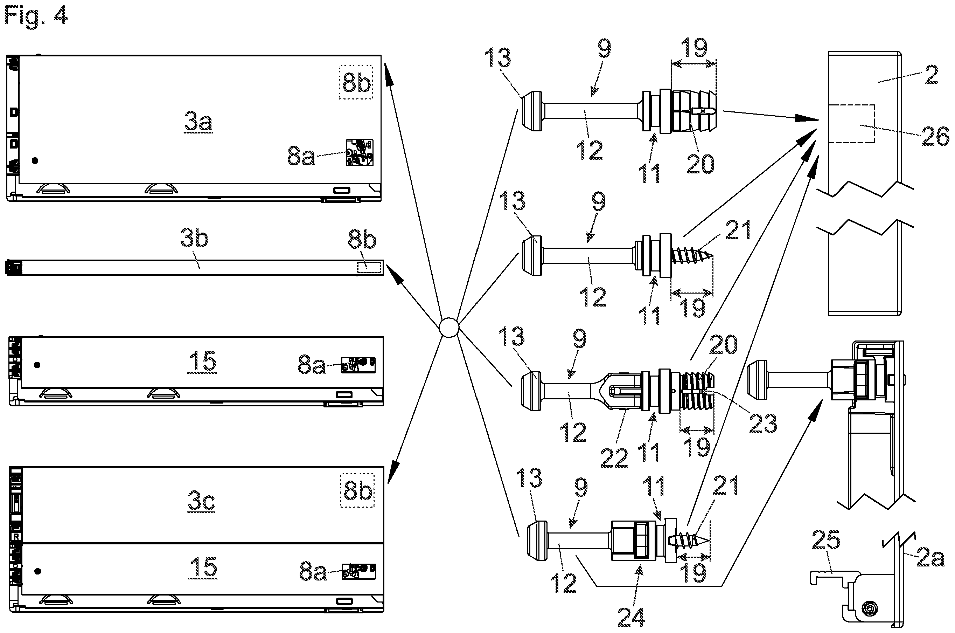

Der in Fig. 1a eingekreiste Bereich ist seitlich daneben in einer vergrößerten Ansicht gezeigt. Der Verbindungsstift 9 ist über einen Befestigungsabschnitt 19 (Fig. 4) an der Rückseite der Frontblende 2a zu montieren und weist einen Halteabschnitt 10 auf, welcher ein Verbindungstück 11 und einen über einen Hals 12 verbundenen Kopfteil 13 umfasst. Das Verbindungstück 11 ist bei dieser Ausführungsform nicht in Verwendung. Der Kopfteil 13 des Verbindungsstiftes 9 ist hingegen durch zumindest ein bewegbar gelagertes Verriegelungselement 14 der zweiten Befestigungsvorrichtung 8b kraftschlüssig und/oder formschlüssig verriegelt, sodass die Frontblende 2a - zusätzlich zur Fixierung durch die (untere) erste Befestigungsvorrichtung 8a, welche mit dem an der Frontblende 2a vormontierten Halteteil 7 verriegelt ist - mit der Schubladenwand 3a verbunden ist.

Fig. 1b zeigt die Ausführung der Schublade 1 gemäß Fig. 1a, wobei die als Hohlkammerprofil ausgebildete Schubladenwand 3a eingeblendet ist. Die Schubladenwand 3a kann dabei im Wesentlichen die gleiche Höhe wie die Rückwand 4 aufweisen. Es handelt sich hierbei also um eine relativ hohe Schubladenwand 3a, wodurch das Aufnahmevolumen der Schublade 1 vergrößert ist.

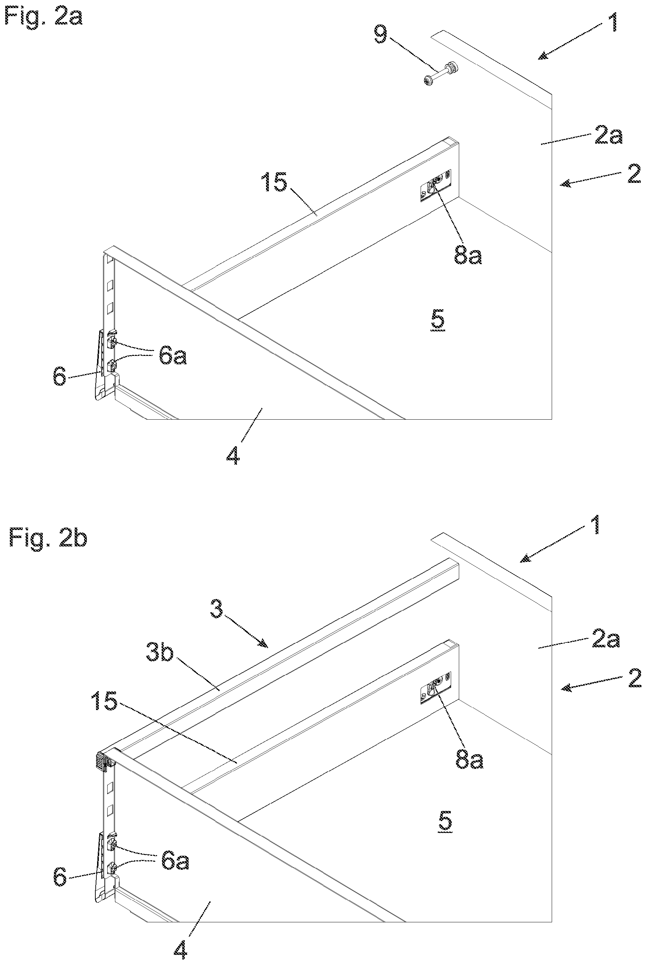

Fig. 2a zeigt einen Teilbereich einer zweiten Schublade 1 mit einem Schubladenboden 5, einem ersten Möbelteil 2 in Form einer Frontblende 2a, einer seitlichen Schubladenwand 15 und einer Rückwand 4. Diese Schubladenwand 15 kann hierbei weniger als die halbe Höhe wie die in Fig. 1b gezeigte Schubladenwand 3a aufweisen. Die Schubladenwand 15 ist wieder als Hohlkammerprofil mit einer inneren Profilwand und einer äußeren Profilwand ausgebildet und weist einen Rückwandhalter 6 mit Vorsprüngen 6a auf, welche im montierten Zustand in korrespondierenden Ausnehmungen 16 (Fig. 3a) der Rückwand 4 eingreifen. Die Schubladenwand 15 umfasst - so wie in den Figuren 1a, 1b gezeigt - eine erste Befestigungsvorrichtung 8a, welche mit einem an der Frontblende 2a zu befestigenden Halteteil 7 lösbar verriegelbar ist. An der Rückseite der Frontblende 2a ist der Verbindungsstift 9 zu montieren, welcher mit einem Möbelteil 3 - hier mit einer über der Schubladenwand 15 angeordneten Schubladenreling 3b - verbindbar ist. Die montierte Stellung der Schubladenreling 3b ist in Fig. 2b gezeigt. Somit ist ein und derselbe Verbindungsstift 9 sowohl mit der in Fig. 1b gezeigten Schubladenwand 3a als auch mit der in Fig. 2b gezeigten Schubladenreling 3b verbindbar.

Fig. 3a zeigt eine dritte Schublade 1 mit dem Schubladenboden 5, der Rückwand 4, der Frontblende 2a und einer als Hohlkammerprofil ausgebildeten Schubladenwand 15, welche die gleiche Höhe wie die niedere Schubladenwand 15 gemäß den Fig. 2a, 2b aufweisen kann. Die Schubladenwand 15 weist im vorderen Endbereich eine erste Befestigungsvorrichtung 8a zum lösbaren Verriegeln mit dem an der Frontblende 2a zu befestigenden Halteteil 7 (Fig. 1a) auf. Das Möbelteil 3 wird bei dieser Ausführungsform von einem Wandelement 3c gebildet, welches - gegebenenfalls unter Bildung eines Spaltes - auf die seitliche Schubladenwand 15 aufgesetzt ist. Das Wandelement 3c kann als Hohlkammerprofil mit einer inneren und einer äußeren Profilwand ausgebildet sein. In Fig. 3a ist vom Wandelement 3c lediglich die zweite Befestigungsvorrichtung 8b gezeigt. Zur Montage des Wandelementes 3c wird dieses zunächst mit einer vorderen Stirnseite auf den Verbindungsstift 9 aufgeschoben und anschließend durch eine nach unten gerichtete Vertikalbewegung auf die Schubladenwand 15 aufgesetzt, wobei eine Gegenkontur 17 des Wandelementes 3c in das Verbindungstück 11 des Verbindungsstiftes 9 einführbar ist. Auf diese Weise ist das Wandelement 3c in Montagelage mit dem Verbindungsstift 9 formschlüssig verbindbar. Ferner weist das Wandelement 3c zumindest einen Gegenanschlag 18 auf, welcher in Montagelage an der Unterseite des Kopfteiles 13 anliegt und das Wandelement 3c in Längsrichtung kraftschlüssig feststellt. Fig. 3b zeigt das an der Schublade 1 montierte Wandelement 3c, wobei die Oberseite des Wandelementes 3c mit der Oberseite der Rückwand bündig abschließt.

Fig. 4 zeigt eine Ansicht von verschiedenen zweiten Möbelteilen 3 in Form der hohen Schubladenwand 3a, der über der niederen Schubladenwand 15 angeordneten Schubladenreling 3b sowie dem auf der niederen Schubladenwand 15 aufgesetzten Wandelement 3c. Die hohe Schubladenwand 3a und die beiden niederen Schubladenwände 15 weisen im vorderen Endbereich jeweils eine erste Befestigungsvorrichtung 8a auf, welche jeweils mit dem an der Frontblende 3a zu befestigenden Halteteil 7 (Fig. 1a) lösbar verriegelbar ist. Diese ersten Befestigungsvorrichtungen 8a sind jeweils bodennah (d.h. in einer dem Schubladenboden 5 benachbarten Position) angeordnet. Über diesen ersten Befestigungsvorrichtungen 8a befinden sich zweite Befestigungsvorrichtungen 8b, welche jeweils mit vier verschiedenen Typen von Verbindungsstiften 9 formschlüssig und/oder kraftschlüssig verriegelbar sind.

Der erste (oberste) der vier gezeigten Verbindungsstifte 9 umfasst einen Kopfteil 13, einen Hals 12, ein Verbindungstück 11 und einen Befestigungsabschnitt 19 in Form eines Dübels 20, welcher zusammen mit der Halteabschnitt 10 (Fig. 1a) einstückig ausgebildet ist. Der Dübel 20 kann dabei in eine Bohrung 26 des ersten Möbelteiles 2 eingepresst werden.

Bei einer zweiten Ausführungsform weist der Befestigungsabschnitt 19 ein Gewinde 21 auf, welches zur Befestigung des Verbindungsstiftes 9 in das erste Möbelteil 2 einschraubbar ist.

Bei einer dritten Ausführungsform ist der Dübel 20 mit dem Halteabschnitt 10 (Fig. 1a) über eine Gelenkachse 22 schwenkbar verbunden, wobei der Verbindungsstift 9 einen Spreizteil 23 zum Aufspreizen des Dübels 20 aufweist, wobei der Spreizteil 23 durch eine Schwenkbewegung des Halteabschnittes 10 um die Gelenkachse 22 bewegbar ist, sodass der Dübel 20 in eine Spreizstellung bewegbar und so innerhalb der Bohrung 26 des ersten Möbelteiles 2 arretierbar ist. Eine solche Funktionalität eines aufspreizbaren Dübels 20 ist beispielsweise in der EP 0 698 357 A1 der Anmelderin offenbart.

Bei einer vierten Ausführungsform ist der Kopfteil 13 mit dem Befestigungsabschnitt 19 lösbar, vorzugsweise durch eine Schnappverbindung 24, verbindbar. Anstelle eines Dübels 20 oder eines Gewindes 21 kann der Verbindungsstift 9 auch durch einen schwenkbaren Hebel 25 an einer Frontblende 2a (beispielsweise eines Innenauszuges) befestigt werden, wobei der Hebel 25 in Montagelage des Verbindungsstiftes 9 in das Verbindungsstück 11 eingreift und damit den Verbindungsstift 9 durch Formschluss an der Frontblende 2a arretiert.

Ein Schubladenset weist folglich zumindest zwei der folgenden drei verschiedenen Möbelteile 3 auf, nämlich:
- eine erste Schubladenwand 3a mit einer ersten Befestigungsvorrichtung 8a zur Befestigung einer Frontblende 2a und mit zumindest einer zweiten Befestigungsvorrichtung 8b zur Befestigung der Frontblende 2a,
- eine zweite Schubladenwand 15, welche gegenüber der ersten Schubladenwand 3a eine geringere Höhe aufweist, wobei die zweite Schubladenwand 15 eine erste Befestigungsvorrichtung 8a zur Befestigung einer Frontblende 2a aufweist und mit einer im Montagezustand über der zweiten Schubladenwand 15 angeordneten Schubladenreling 3b zur Befestigung an der Frontblende 2a, wobei die Schubladenreling 3b eine zweite Befestigungsvorrichtung 8b zur Befestigung der Frontblende 2a aufweist,
- eine dritte Schubladenwand 15, welche gegenüber der ersten Schubladenwand 3a eine geringere Höhe aufweist, wobei auf der dritten Schubladenwand 15 ein Wandelement 3c aufgesetzt ist, wobei die dritte Schubladenwand 15 eine erste Befestigungsvorrichtung 8a zur Befestigung einer Frontblende 2a aufweist und dass das Wandelement 3c eine zweite Befestigungsvorrichtung 8b zur Befestigung an der Frontblende 2a aufweist,
und einen Verbindungsstift 9, welcher an einer Frontblende 2a zu befestigen ist und zumindest einen Halteabschnitt 10 aufweist, wobei derselbe Halteabschnitt 10 des Verbindungsstiftes 9 wahlweise mit der zweiten Befestigungsvorrichtung 8b von mindestens zwei der drei verschiedenen zweiten Möbelteile 3 verbindbar ist.

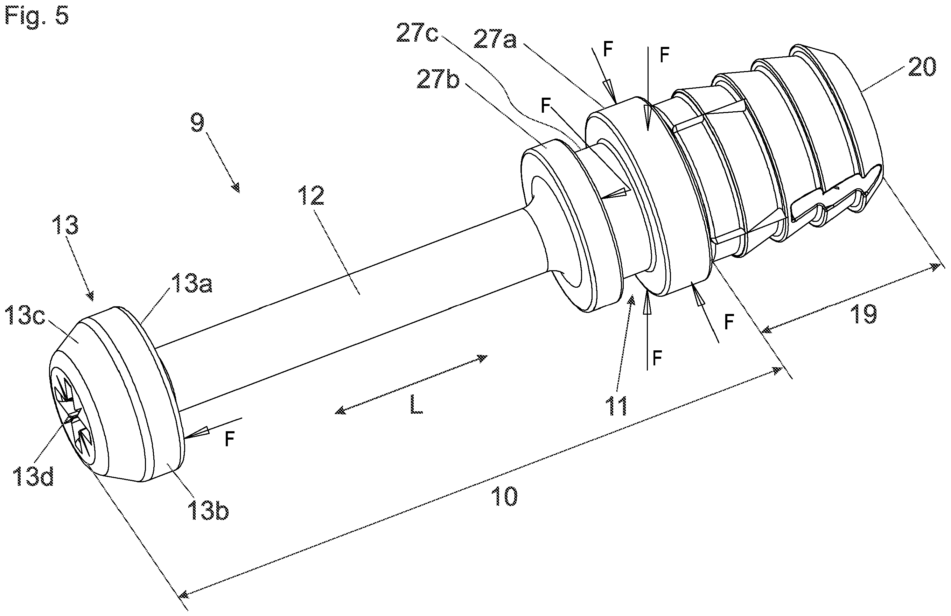

Fig. 5 zeigt ein Ausführungsbeispiel einer Verbindungsstift einer erfindungsgemäßen Anordnung 9 in einer perspektivischen Ansicht. Der Verbindungsstift 9 weist einen Befestigungsabschnitt 19, beispielsweise mit einem Dübel 20, zur Befestigung am ersten Möbelteil 2 auf. Der Halteabschnitt 10 ist zum Verbinden mit dem zweiten Möbelteil 3 vorgesehen und umfasst ein Verbindungsstück 11 zum formschlüssigen Verbinden des zweiten Möbelteiles 3 mit dem Verbindungsstift 9 und einen über einen Hals 12 in einer Längsrichtung (L) beabstandeten Kopfteil 13, wobei wahlweise zumindest zwei verschiedene zweite Möbelteile 3 durch das Verbindungsstück 11 formschlüssig und/oder durch den Kopfteil 13 kraftschlüssig mit dem Verbindungsstift 9 verbindbar sind. Das Verbindungsstück 11 weist einen ersten, vorzugsweise als Steg ausgebildeten, Vorsprung 27a und zumindest einen zweiten, vorzugsweise als Steg ausgebildeten, Vorsprung 27b auf, wobei der erste Vorsprung 27a und der zweite Vorsprung 27b jeweils vom Verbindungsstift 9 quer abstehen und in Längsrichtung (L) des Verbindungsstiftes 9 durch eine Ausnehmung 27c, beispielsweise in Form eines zylindrischen Abschnitts, voneinander beabstandet sind. Dabei kann vorgesehen sein, dass der erste Vorsprung 27a und/oder der zweite Vorsprung 27b und/oder der zylindrische Abschnitt und/oder der Kopfteil 13 um die Längsachse (L) rotationssymmetrisch ausgebildet ist bzw sind, wodurch der Verbindungsstift 9 besonders einfach herstellbar ist. Der zylindrische Abschnitt kann gegenüber dem ersten Vorsprung 27a und dem zweiten Vorsprung 27b einen geringeren Durchmesser aufweisen. Der erste Vorsprung 27a und/oder der zweite Vorsprung 27b kann als Ringsteg und die Ausnehmung 27c kann als Ringnut ausgebildet sein. Der erste Vorsprung 27a fixiert das zweite Möbelteil 3 in einer quer zur Längsrichtung (L) verlaufenden Richtung, während das zweite, dritte oder vierte Möbelteil 3 relativ zum Verbindungsstift 9 durch die Ausnehmung 27c in Längsrichtung (L) festgestellt ist.

Der Kopfteil 13 zur kraftschlüssigen Verbindung mit dem zweiten Möbelteil 3 weist einen gegenüber dem Hals 12 größeren Durchmesser, eine, vorzugsweise rechtwinklig zur Längsachse (L) verlaufende, Anschlagfläche 13a, einen ringförmigen Abschnitt 13b und eine zur Spitze des Kopfteiles 13 hin verlaufende Schrägfläche 13c auf. Überdies kann der Kopfteil 13 mit einer Werkzeugaufnahme 13d versehen werden, wobei durch Drehung der Werkzeugaufnahme 13d mittels eines Werkzeuges ein Gewinde 21 des Verbindungsstiftes 9 in das erste Möbelteil 2 einschraubbar ist. Die in Fig. 5 dargestellten Pfeile (F) kennzeichnen jeweils jene Bereiche des Halteabschnittes 10, an denen im montierten Zustand des zweiten, dritten oder vierten Möbelteiles 3 die kraftschlüssige und formschlüssige Verbindung wirksam sind.

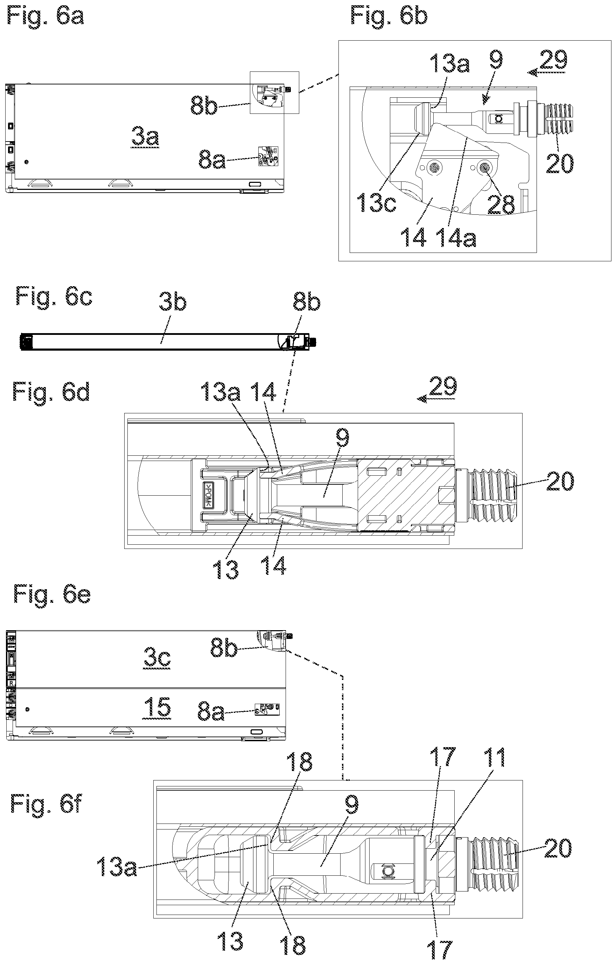

Fig. 6a zeigt die hohe Seitenwand 3a, welche zwei in Höhenrichtung voneinander beabstandete Befestigungsvorrichtungen 8a, 8b aufweist. Die zweite (obere) Befestigungsvorrichtung 8b ist mit dem Verbindungsstift 9 lösbar verriegelbar. Fig. 6b zeigt eine vergrößerte Detailansicht der zweiten Befestigungsvorrichtung 8b gemäß Fig. 6a, welche zumindest ein federndes oder von einer Feder beaufschlagtes Verriegelungselement 14 umfasst, welches mit dem Halteabschnitt 10 des Verbindungsstiftes 9 lösbar verbindbar, vorzugsweise verrastbar, ist. Dabei kann vorgesehen sein, dass der Verbindungsstift 9 in einer Einschubrichtung 29 in die zweite Befestigungsvorrichtung 8b einführbar ist, wobei das Verriegelungselement 14 durch einen Eintritt des Verbindungsstiftes 9 in die zweite Befestigungsvorrichtung 8b entgegen seiner federnden Wirkung in einer quer zur Einschubrichtung 29 verlaufenden Richtung bewegbar und der Verbindungsstift 9 durch eine fortgesetzte Bewegung in Einschubrichtung 29 durch die federnde Wirkung des Verriegelungselementes 14 selbsttätig verriegelbar ist. In gezeigten Ausführungsbeispiel gemäß Fig. 6b ist das Verriegelungselement 14 um die Drehachse 28 schwenkbar gelagert und von einem (nicht gezeigten) Federelement vorgespannt, wobei beim Einführen des Verbindungsstiftes 9 eine Schrägfläche 14a des Verriegelungselementes 14 mit der Schrägfläche 13c des Kopfteiles 13 zusammenwirkt, wodurch das Verriegelungselement 14 um die Drehachse 28 im Gegenuhrzeigersinn verkippt und der Verbindungsstift 9 durch das anschließende Wiederaufschnappen des Verriegelungselementes 14 verriegelbar ist. In der verriegelten Stellung liegt das Verriegelungselement 14 an der Anschlagfläche 13a des Kopfteiles 13 an, wodurch der Verbindungsstift 9 kraftschlüssig fixiert ist.

Fig. 6c zeigt die Schubladenreling 3b, welche im vorderen Endbereich eine zweite Befestigungsvorrichtung 8b zur Befestigung des Verbindungsstiftes 9 aufweist. In Fig. 6d ist die zweite Befestigungsvorrichtung 8b vergrößert dargestellt. Im gezeigten Ausführungsbeispiel weist das Verriegelungselement 14 zwei Federzungen auf, welche beim einem Einführen des Verbindungsstiftes 9 in die zweite Befestigungsvorrichtung 8b entgegen ihrer federnden Wirkung in einer quer zur Einschubrichtung 29 verlaufenden Richtung elastisch verbiegbar sind, wobei durch eine fortgesetzte Bewegung des Verbindungsstiftes 9 in Einschubrichtung 29 die besagten Federzungen wieder zurückschnappen und dadurch den Verbindungsstift 9 kraftschlüssig fixieren. In der gezeigten Montagestellung liegen die freien Enden der Federzungen an der Anschlagfläche 13a des Kopfteiles 13 an.

Fig. 6e zeigt das auf der Schubladenwand 15 aufgesetzte Wandelement 3c, welches im vorderen Endbereich eine zweite Befestigungsvorrichtung 8b aufweist. Fig. 6f zeigt die zweite Befestigungsvorrichtung 8b in einer vergrößerten Ansicht. Im Gegensatz zu den Ausführungen gemäß den Fig. 6a-6d wird das Wandelement 3c hierbei mit einer Stirnseite auf den Verbindungsstift 9 aufgeschoben und anschließend von oben her (d.h. durch eine nach unten gerichtete Vertikalbewegung des Wandteiles 3c zur Schubladenwand 15 hin) auf den Halteabschnitt 10 des Verbindungsstiftes 9 aufgeschoben, wobei eine Gegenkontur 17 des Wandteiles 3c in das Verbindungsstück 11 des Verbindungsstiftes 9 einführbar und so der Formschluss zwischen dem Wandelement 3c und dem Verbindungsstift 9 hergestellt wird. Die Gegenanschläge 18 (siehe auch Fig. 3a) können an der Anschlagfläche 13a des Kopfteiles 13 anliegen oder gegebenenfalls von der Anschlagfläche 13a geringfügig beabstandet sein. Wenn beispielsweise eine Person an der Frontblende 2a der Schublade 1 ruckartig zieht, so schlägt die Anschlagfläche 13a des Verbindungsstiftes 9 an den Gegenanschlägen 18 des Wandteiles 3c an, wobei ein Herausrutschen des Verbindungsstiftes 9 aus der zweiten Befestigungsvorrichtung 8b in einem solchen Überlastfall verhindert wird.

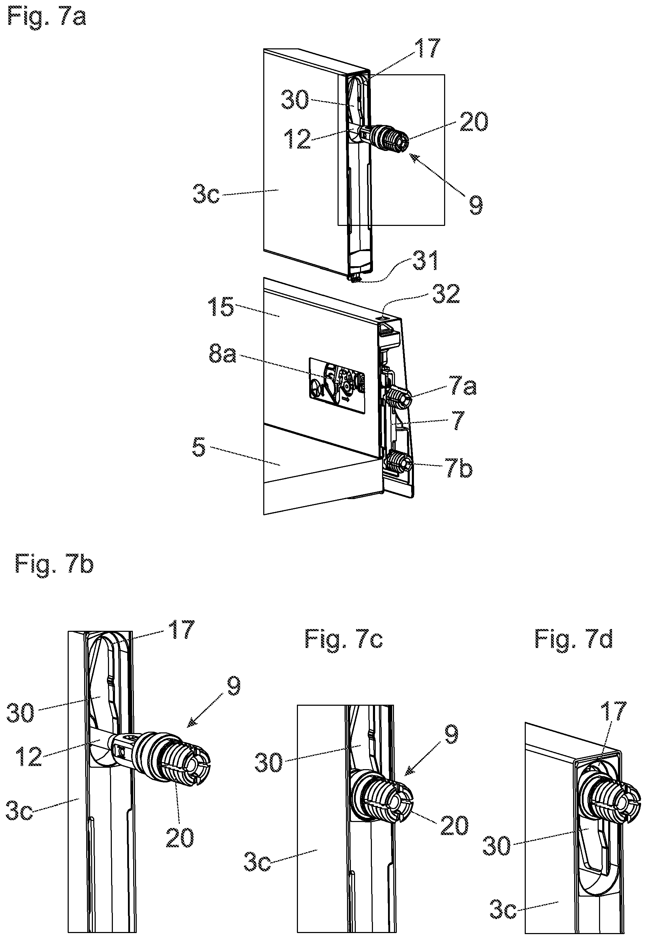

Fig. 7a zeigt den vorderen Endbereich einer niederen Schubladenwand 15 und des darauf anzuordnenden Wandelementes 3c. Die erste (untere) Befestigungsvorrichtung 8a der Schubladenwand 15 ist mit dem an der Rückseite der Frontblende 2a zu befestigenden Halteteil 7, welches zwei in Höhenrichtung voneinander beabstandete Befestigungsdübel 7a, 7b aufweist, lösbar verrastbar. An der Oberseite der Schubladenwand 15 ist eine Öffnung 32 vorgesehen, in welche das Wandelement 3c über einen Haken 31 einhängbar ist. Das Wandelement 3c weist an seiner Stirnseite ein Schlüsselloch 30 auf, durch welches das leicht schräg gestellte Wandelement 3c auf den vormontierten Verbindungsstift 9 aufschiebbar ist. Die Montage des Wandelementes 3c ist in den Fig. 7b-7d gezeigt. Nach erfolgtem Aufschieben des Wandelementes 3c auf den Verbindungsstift 9 (Fig. 7b, 7c) wird das Wandelement 3c durch manuelle Kraftausübung nach unten entlang des sich nach oben hin verjüngenden Schlüssellochs 30 verschoben, bis eine Gegenkontur 17 des Wandelementes 3c in das Verbindungsstück 11 des Verbindungsstiftes 9 eingreift und der Formschluss hergestellt ist.

## Patentansprüche

1. Anordnung mit einem ersten Möbelteil (2) in Form einer Frontblende (2a) einem zweiten Möbelteil (3) in Form einer Schubladenwand (3a), einem dritten Möbelteil (3) in Form einer Schubladenreling (3b), einem vierten Möbelteil (3) in Form eines auf einer Schubladenwand (15) aufgesetzten Wandelement (3c) und mit einem Verbindungsstift (9) mit welchem die Schubladenwand (3a), die Schubladenreling (3b) und das Wandelement (3c) jeweils einzeln mit der Frontblende (2a) verbindbar sind, wobei der Verbindungsstift (9) aufweist:
- einen Befestigungsabschnitt (19) zur Befestigung des Verbindungstiftes (9) am ersten Möbelteil (2),
- einen Halteabschnitt (10) zum Verbinden des Verbindungsstiftes (9) mit dem zweiten, dritten oder vierten Möbelteil (3), wobei der Halteabschnitt (10) des Verbindungsstiftes (9) ein dem Befestigungsabschnitt (19) zugewandtes Verbindungsstück (11) in Form eines Vorsprungs (27a, 27b) oder einer Vertiefung (27c) zum formschlüssigen Verbinden des zweiten Möbelteiles (3) mit dem Verbindungsstift (9) und einen über einen Hals (12) in einer Längsrichtung (L) des Verbindungsstiftes (9) beabstandeten Kopfteil (13) aufweist, wobei in einem Zustand, in welchem der Verbindungsstift (9) über den Befestigungsabschnitt (19) am ersten Möbelteil (2) befestigt ist, zumindest zwei verschiedene der zweiten, dritten und vierten Möbelteile (3) durch das Verbindungsstück (11) formschlüssig und/oder durch den Kopfteil (13) kraftschlüssig mit dem Verbindungsstift (9) verbindbar sind,
wobei die Schubladenwand (3a) und die Schubladenreling (3b) und das Wandelement (3c) zumindest eine Befestigungsvorrichtung (8a, 8b) zum Befestigen der Frontblende (2a) aufweist, wobei die Befestigungsvorrichtung (8a, 8b) zumindest ein federndes oder von einer Feder beaufschlagtes Verriegelungselement (14) umfasst, welches mit dem Halteabschnitt (10) des Verbindungsstiftes (9) lösbar verbindbar, vorzugsweise verrastbar, ist.

2. Anordnung nach Anspruch 1, **dadurch gekennzeichnet, dass** der Befestigungsabschnitt (19) ein Gewinde (21) zur Befestigung des Verbindungsstiftes (9) am ersten Möbelteil (2) aufweist.

3. Anordnung nach Anspruch 1, **dadurch gekennzeichnet, dass** der Befestigungsabschnitt (19) einen Dübel (20) zur Befestigung des Verbindungsstiftes (9) am ersten Möbelteil (2) aufweist.

4. Anordnung nach Anspruch 3, **dadurch gekennzeichnet, dass** der Dübel (20) mit dem Halteabschnitt (10) über eine Gelenkachse (22) schwenkbar verbunden ist, wobei der Verbindungsstift (9) einen Spreizteil (23) zum Aufspreizen des Dübels (20) aufweist, wobei der Spreizteil (23) durch eine Schwenkbewegung des Halteabschnittes (10) um die Gelenkachse (22) bewegbar ist, sodass der Dübel (20) in eine Spreizstellung bewegbar und so innerhalb einer Bohrung (26) des ersten Möbelteiles (2) arretierbar ist.

5. Anordnung nach Anspruch 3, **dadurch gekennzeichnet, dass** der Dübel (20) zusammen mit dem Halteabschnitt (10) einstückig ausgebildet ist.

6. Anordnung nach einem der Ansprüche 1 bis 4, **dadurch gekennzeichnet, dass** der Kopfteil (13) mit dem Befestigungsabschnitt (19) lösbar, vorzugsweise durch eine Schnappverbindung (24), verbindbar ist.

7. Anordnung nach einem der Ansprüche 1 bis 6, **dadurch gekennzeichnet, dass** das Verbindungsstück (11) einen ersten, vorzugsweise als Steg ausgebildeten, Vorsprung (27a) und zumindest einen zweiten, vorzugsweise als Steg ausgebildeten, Vorsprung (27b) aufweist, wobei der erste Vorsprung (27a) und der zweite Vorsprung (27b) jeweils vom Verbindungsstift (9) quer abstehen und in Längsrichtung (L) des Verbindungsstiftes (9) durch die Ausnehmung (27c), vorzugsweise in Form eines zylindrischen Abschnitts, voneinander beabstandet sind.

8. Anordnung nach Anspruch 7, **dadurch gekennzeichnet, dass** der erste Vorsprung (27a) und/oder der zweite Vorsprung (27b) und/oder die Ausnehmung (27c) und/oder der Kopfteil (13) um die Längsrichtung (L) des Verbindungsstiftes (9) rotationssymmetrisch ausgebildet ist bzw sind.

9. Anordnung nach Anspruch 7 oder 8, **dadurch gekennzeichnet, dass** der zylindrische Abschnitt (27c) gegenüber dem ersten Vorsprung (27a) und dem zweiten Vorsprung (27b) einen geringeren Durchmesser aufweist.

10. Anordnung nach einem der Ansprüche 7 bis 9, **dadurch gekennzeichnet, dass** der erste Vorsprung (27a) und/oder der zweite Vorsprung (27b) als Ringsteg und die Ausnehmung (27c) als Ringnut ausgebildet sind.

11. Anordnung nach einem der Ansprüche 1 bis 10, **dadurch gekennzeichnet, dass** der Kopfteil (13) gegenüber dem Hals (12) einen größeren Durchmesser aufweist.

12. Anordnung nach einem der Ansprüche 1 bis 11, **dadurch gekennzeichnet, dass** der Verbindungsstift (9) in einer Einschubrichtung (29) in die Befestigungsvorrichtung (8a, 8b) einführbar ist, wobei das Verriegelungselement (14) durch einen Eintritt des Verbindungsstiftes (9) in die Befestigungsvorrichtung (8a, 8b) entgegen seiner federnden Wirkung in einer quer zur Einschubrichtung (29) verlaufenden Richtung bewegbar und der Verbindungsstift (9) durch eine fortgesetzte Bewegung in Einschubrichtung (29) durch die federnde Wirkung des Verriegelungselementes (14) selbsttätig verriegelbar ist.

## Claims

1. An arrangement comprising a first furniture part (2) in the form of a front panel (2a), a second furniture part (3) in the form of a drawer wall (3a), a third furniture part (3) in the form of a drawer strut (3b), a fourth furniture part (3) in the form of a wall element (3c) set onto a drawer wall (15), and with a connecting pin (9) for connecting the drawer wall (3a), the drawer strut (3b) and the wall element (3c) each individually to the front panel (2a), wherein the connecting pin (9) includes:
- a fastening portion (19) for fastening the connecting pin (9) to the first furniture part (2),
- a holding portion (10) for connecting the connecting pin (9) to the second, third or fourth furniture part (3), wherein the holding portion (10) of the connecting pin (9) includes a connecting portion (11) facing towards the fastening portion (19), the connecting portion (11) being in the form of a protrusion (27a, 27b) or a recess (27c) for connecting the second furniture part (3) to the connecting pin (9) in a form-locking manner, and a head portion (13) spaced in a longitudinal direction (L) of the connecting pin (9) by a neck portion (12), wherein in a condition in which the connecting pin (9) is fixed to the first furniture part (2) via the fastening portion (19), at least two different of the second, third and fourth furniture parts (3) can be connected to the connecting pin (9) by the connecting portion (11) in a form-locking manner and/or by the head portion (13) in a force-locking manner,
wherein the drawer wall (3a) and the drawer strut (3b) and the wall element (3c) include at least one fastening device (8a, 8b) for fixing the front panel (2a), wherein the fastening device (8a, 8b) includes at least one resilient or a spring-loaded locking element (14) configured to be releasably connected, preferably locked, to the holding portion (10) of the connecting pin (9).

2. The arrangement according to claim 1, **characterized in that** the fastening portion (19) includes a threaded portion (21) for fixing the connecting pin (9) to the first furniture part (2).

3. The arrangement according to claim 1, **characterized in that** the fastening portion (19) includes a dowel (20) for fixing the connecting pin (9) to the first furniture part (2).

4. The arrangement according to claim 3, **characterized in that** the dowel (20) is pivotally connected to the holding portion (10) by a hinge axis member (22), wherein the connecting pin (9) includes an expansion portion (23) for expanding the dowel (20), wherein the expansion portion (23) can be moved about the hinge axis member (22) by a pivoting movement of the holding portion (10), so that the dowel (20) can be moved into an expansion position so as to be arrested within a bore (26) of the first furniture part (2).

5. The arrangement according to claim 3, **characterized in that** the dowel (20), together with the holding portion (10), has an integral one-piece configuration.

6. The arrangement according to one of the claims 1 to 4, **characterized in that** the head portion (13) can be releasably connected to the fastening portion (19), preferably by a snap-connection device (24).

7. The arrangement according to one of the claims 1 to 6, **characterized in that** the connecting portion (11) includes a first protrusion (27a), preferably in the form of a limb, and at least one second protrusion (27b), preferably in the form of a limb, each of the first protrusion (27a) and the second protrusion (27b) protruding transversely from the connecting pin (9) and being spaced from one another in the longitudinal direction (L) of the connecting pin (9) by the recess (27c), preferably in the form of a cylindrical portion.

8. The arrangement according to claim 7, **characterized in that** the first protrusion (27a) and/or the second protrusion (27b) and/or the recess (27c) and/or the head portion (13) is or are configured so as to be rotationally symmetrical about the longitudinal direction (L) of the connecting pin (9).

9. The arrangement according to claim 7 or 8, **characterized in that** cylindrical portion (27c) has a diameter being less than a diameter of the first protrusion (27a) and the second protrusion (27b).

10. The arrangement according to one of the claims 7 to 9, **characterized in that** the first protrusion (27a) and/or the second protrusion (27b) is or are configured as an annular limb, and the recess (27c) being configured as an annular groove.

11. The arrangement according to one of the claims 1 to 10, **characterized in that** the head portion (13) has a larger diameter than the neck portion (12).

12. The arrangement according to one of the claims 1 to 11, **characterized in that** the connecting pin (9) can be introduced into the fastening device (8a, 8b) in an insertion direction (29), the locking element (14) being configured to be moved against its resilient action in a direction transverse to the insertion direction (29) by an entry of the connecting pin (9) into the fastening device (8a, 8b), and the connecting pin (9) can be automatically locked by the resilient action of the locking element (14) upon a continued movement in the insertion direction (29).

## Revendications

1. Ensemble avec une première partie de meuble (2) sous la forme d'un panneau frontal (2a), une deuxième partie de meuble (3) sous la forme d'une paroi de tiroir (3a), une troisième partie de meuble (3) sous la forme d'une rehausse latérale de tiroir (3b), une quatrième partie de meuble (3) sous la forme d'un élément de paroi (3c) placé sur une paroi de tiroir (15), et avec une tige de liaison (9), par laquelle la paroi de tiroir (3a), la rehausse latérale de tiroir (3b) et l'élément de paroi (3c) peuvent être reliés respectivement individuellement au panneau frontal (2a), dans lequel la tige de liaison (9) présente:
- une section de fixation (19) servant à fixer la tige de liaison (9) au niveau de la première partie de meuble (2),
- une section de maintien (10) servant à relier la tige de liaison (9) à la deuxième, troisième ou quatrième partie de meuble (3), dans lequel la section de maintien (10) de la tige de liaison (9) présente une pièce de liaison (11) tournée vers la section de fixation (19) sous la forme d'une partie faisant saillie (27a, 27b) ou d'un renfoncement (27c) servant à relier par complémentarité de forme la deuxième partie de meuble (3) à la tige de liaison (9) et une partie de tête (13) tenue à distance par l'intermédiaire d'un col (12) dans une direction longitudinale (L) de la tige de liaison (9), dans lequel dans un état, dans lequel la tige de liaison (9) est fixée au niveau de la première partie de meuble (2) par l'intermédiaire de la section de fixation (19), au moins deux parties différentes parmi les deuxième, troisième et quatrième, parties de meuble (3) peuvent être reliées à la tige de liaison (9) par complémentarité de forme par la pièce de liaison (11) et/ou à force par la partie de tête (13),
dans lequel la paroi de tiroir (3a) et la rehausse latérale de tiroir (3b) et l'élément de paroi (3c) présentent au moins un dispositif de fixation (8a, 8b) servant à fixer le panneau frontal (2a), dans lequel le dispositif de fixation (8a, 8b) comprend au moins un élément de verrouillage (14) élastique ou pouvant être soumis à l'action d'un ressort, lequel peut être relié, de préférence peut être enclenché, de manière amovible à la section de maintien (10) de la tige de liaison (9).

2. Ensemble selon la revendication 1, **caractérisé en ce que** la section de fixation (19) présente un filetage (21) servant à fixer la tige de liaison (9) au niveau de la première partie de meuble (2).

3. Ensemble selon la revendication 1, **caractérisé en ce que** la section de fixation (19) présente une cheville (20) servant à fixer la tige de liaison (9) au niveau de la première partie de meuble (2).

4. Ensemble selon la revendication 3, **caractérisé en ce que** la cheville (20) est reliée de manière à pouvoir pivoter par l'intermédiaire d'un axe d'articulation (22) à la section de maintien (10), dans lequel la tige de liaison (9) présente une partie d'écartement (23) servant à ouvrir par écartement la cheville (20), dans lequel la partie d'écartement (23) peut être déplacée par un déplacement par pivotement de la section de maintien (10) autour de l'axe d'articulation (22) de sorte que la cheville (20) peut être déplacée dans une position d'écartement et peut être arrêtée ainsi à l'intérieur d'un alésage (26) de la première partie de meuble (2).

5. Ensemble selon la revendication 3, **caractérisé en ce que** la cheville (20) est réalisée d'un seul tenant conjointement avec la section de maintien (10).

6. Ensemble selon l'une quelconque des revendications 1 à 4, **caractérisé en ce que** la partie de tête (13) peut être reliée à la section de fixation (19) de manière amovible, de préférence par une liaison à déclic (24).

7. Ensemble selon l'une quelconque des revendications 1 à 6, **caractérisé en ce que** la pièce de liaison (11) présente une première partie faisant saillie (27a), réalisée de préférence en tant qu'entretoise, et au moins une deuxième partie faisant saillie (27b), réalisée de préférence en tant qu'entretoise, dans lequel la première partie faisant saillie (27a) et la deuxième partie faisant saillie (27b) dépassent de manière transversale respectivement de la tige de liaison (9) et sont tenues à distance l'une de l'autre dans la direction longitudinale (L) de la tige de liaison (9) par l'évidement (27c), de préférence sous la forme d'une section cylindrique.

8. Ensemble selon la revendication 7, **caractérisé en ce que** la première partie faisant saillie (27a) et/ou la deuxième partie faisant saillie (27b) et/ou l'évidement (27c) et/ou la partie de tête (13) est ou sont réalisées de manière symétrique en rotation autour de la direction longitudinale (L) de la tige de liaison (9).

9. Ensemble selon la revendication 7 ou 8, **caractérisé en ce que** la section (27c) cylindrique présente un diamètre plus petit par rapport à la première partie faisant saillie (27a) et à la deuxième partie faisant saillie (27b).

10. Ensemble selon l'une quelconque des revendications 7 à 9, **caractérisé en ce que** la première partie faisant saillie (27a) et/ou la deuxième partie faisant saillie (27b) sont réalisées en tant qu'entretoise annulaire et l'évidement (27c) est réalisé en tant que rainure annulaire.

11. Ensemble selon l'une quelconque des revendications 1 à 10, **caractérisé en ce que** la partie de tête (13) présente un diamètre plus grand par rapport au col (12).

12. Ensemble selon l'une quelconque des revendications 1 à 11, **caractérisé en ce que** la tige de liaison (9) peut être introduite dans le dispositif de fixation (8a, 8b) dans une direction d'enfilement (29), dans lequel l'élément de verrouillage (14) peut être déplacé par une entrée de la tige de liaison (9) dans le dispositif de fixation (8a, 8b) dans le sens opposé à son action élastique dans une direction s'étendant de manière transversale par rapport à la direction d'enfilement et la tige de liaison (9) peut être verrouillée de manière autonome par un déplacement continu dans la direction d'enfilement (29) par l'action élastique de l'élément de verrouillage (14).
